(19) Europäisches Patentamt
European Patent Office
Office européen des brevets

(11) EP 3 601 383 B1

(12) EUROPEAN PATENT SPECIFICATION

(45) Date of publication and mention of the grant of the patent:
**10.04.2024 Bulletin 2024/15**

(21) Application number: **18711593.6**

(22) Date of filing: **23.03.2018**

(51) International Patent Classification (IPC):
***C08F 210/06*** *(2006.01)* ***C08L 23/10*** *(2006.01)*

(52) Cooperative Patent Classification (CPC):
(C-Sets available)
**C08F 210/06** (Cont.)

(86) International application number:
**PCT/EP2018/057505**

(87) International publication number:
**WO 2018/177952 (04.10.2018 Gazette 2018/40)**

# (54) PROPYLENE ETHYLENE RANDOM COPOLYMER

PROPYLENETHYLEN-RANDOM-COPOLYMER

COPOLYMÈRE ALÉATOIRE DE PROPYLÈNE-ÉTHYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2017 EP 17162952**

(43) Date of publication of application:
**05.02.2020 Bulletin 2020/06**

(73) Proprietor: **Basell Poliolefine Italia S.r.l.**
**20121 Milano (IT)**

(72) Inventors:
- **MEI, Gabriele**
  **Channelview, Texas 77530 (US)**
- **MAZZUCCO, Antonio**
  **44122 Ferrara (IT)**
- **CAPUTO, Tiziana**
  **44122 Ferrara (IT)**
- **BALESTRA, Enrico**
  **44123 Ferrara (IT)**
- **TARTARI, Davide**
  **44122 Ferrara (IT)**
- **MOSCARDI, Gilberto**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 3 015 503**
**WO-A1-2008/012144**
**WO-A1-2009/080660**
**WO-A1-2013/092615**

EP 3 601 383 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 2/001;**
**C08F 210/06, C08F 4/6492;**
C08F 210/06, C08F 210/16, C08F 2500/12,
C08F 2500/17, C08F 2500/34, C08F 2500/35

**Description**

FIELD OF THE INVENTION

The present disclosure relates to propylene ethylene random copolymer obtained with a gas phase process.

BACKGROUND OF THE INVENTION

As is known, the isotactic polypropylene is endowed with an exceptional combination of excellent properties which render it suitable for a very great number of uses.

In order to improve the properties of the isotactic polypropylene the crystallinity of the propylene homopolymer is decreased by copolymerization of the propylene with small quantities of ethylene and/or $\alpha$-olefins such as 1-butene, 1-pentene and 1-hexene. In this manner one obtains the so called random crystalline propylene copolymers which, when compared to the homopolymer, are essentially characterized by better flexibility and transparency.

Propylene random copolymers do not offer sufficient flexural modulus to be used in some applications such as rigid packaging.

WO 01 /92406 describes a propylene polymer composition comprising (percent by weight):

from 70 to 90%, of a random copolymer of propylene with ethylene, containing from 1 to 6%, of ethylene, having a content of fraction insoluble in xylene at room temperature of not less than 93;
from 10% to 30%, of a copolymer of propylene with ethylene, containing from 8 to 18%, of ethylene;
wherein the ratio (B)/$C2_B$ of the percent by weight of (B), with respect to the total weight of (A) and (B), to the percent by weight of ethylene in (B), with respect to the total weight of (B), represented in the above formula by $C2_B$, is 2.5 or lower. The MFR L ranges from 0.5 to 50 g/10 min. However this composition show low flexural modulus with respect to the ethylene content and the xylene solubles.

WO 208/012144 disclsoses popylene polymers having specific values of total comonomer content and melting temperature.
EP3 015 503 discloses heterophasic polypropylene composition havin among other features intinsic viscosities measured in decaline ranging from 1.2 to 4.5 dl/g
WO 2009/080660 relates to a process for gas phase polymerization similar from that one of the present applicantion.
WO 2013/092615 discloses a process for the manufacture of soft heterophasic propylene copolymers, comparative example 2 has a intrinsic viscosity of the fraction soluble in xylene measured in decaline of 3.4 dl/g.

SUMMARY OF THE INVENTION

The present disclosure provides a random propylene ethylene copolymer having an improved flexural modulus.

The propylene ethylene copolymer of the present disclosure has:

(i) an ethylene derived units content ranging from 2.0 wt% to 11.0 wt%,

(ii)the fraction soluble in xylene at 25°C ranging from 7.1 wt% to 28.5 wt%

(iii) the intrinsic viscosity of the fraction soluble in xylene at 25 °C ranges from 3.5 dl/g to dl/g 5.2

(iv) the melting point is higher than 140.0°C and fulfils the following relation (I):

$$Tm>155-1.4xC2 \quad (I)$$

Wherein Tm is the melting point of the propylene ethylene copolymer measured by DSC and C2 is the is the wt% of ethylene derived units of the propylene ethylene copolymer

(v) the flexural modulus, TM, is higher than 500 MPa and fulfils the following relation (II)

$$TM > 1900 - 285xC2 + 50xXs \quad (II)$$

wherein TM is the flexural modulus in MPa, C2 is the wt% of ethylene derived units of the propylene ethylene copolymer and Xs is the fraction soluble in xylene at 25°C (wt%) of the propylene ethylene copolymer,

DETAILED DESCRIPTION OF THE INVENTION

The present disclosure provides a random propylene ethylene copolymer having an improved flexural modulus.

The random propylene ethylene copolymer of the present disclosure has:

(i) an ethylene derived units content ranging from 2.0 wt% to 11.0 wt%, preferably from 3.3 twt% to 10.2 wt%; more preferably from 3.8 wt% to 9.2 wt%; even more preferably from 4.0 wt% to 6.5 wt%;

(ii) the fraction soluble in xylene at 25°C ranging from 7.1 wt% to 28.5 wt%; preferably from 8.2 wt% to 25.3 wt%; more preferably from 9.1 wt% to 22.0 wt% even more preferably from 9.3 wt% to 14.1 wt%;

(iii) the intrinsic viscosity of the fraction soluble in xylene at 25°C ranges from 3.5 dl/g to 5.2 dl/g; more preferably from 3.7 dl/g to 5.0 dl/g;

(iv) the melting point is higher than 140.0°C and fulfils the following relation (I):

$$Tm > 155 - 1.4xC2 \quad (I)$$

Preferably relation (I) is Tm>156-1.4xC2; more preferably relation (I) is Tm>157-1.4xC2

Wherein Tm is the melting point of the propylene ethylene copolymer measured by DSC and C2 is the is the wt% of ethylene derived units of the propylene ethylene copolymer

(v) the flexural modulus, TM, is higher than 500MPa and fulfils the following relation (II)

$$TM > 1900 - 285xC2 + 50xXs \quad (II)$$

Preferably relation (II) is TM> 1920 - 285xC2+50xXs; more preferably relation (II) is TM> 1950 - 285xC2+50xXs

Whrein TM is the flexural modulus in MPA, C2 is the wt% of ethylene derived units of the propylene ethylene copolymer and Xs is the fraction soluble in xylene at 25°C (wt%) of the propylene ethylene copolymer.

Preferably the melt flow rate MFR. (ISO 1133 (230° C, 2.16 kg) of the propylene ethylene copolymer of the present disclosure ranges from 0.2 g/10 min to 100.0 g/10 min. Preferably the melt flow rate MFR. (ISO 1133 (230 ° C, 2.16 kg) ranges from 0.2 to 50.0 g/10 min; more preferably from 0.2 to 10 g/10 min.

The term propylene ethylene copolymer it is referred to a bipolymer containing only propylene and ethylene.

The random propylene ethylene copolymer of the present disclosure is endowed with an high flexural modulus and high melting point with respect to the ethylene content and xylene soluble content. This renders the random propylene ethylene copolymer especially fit for rigid packaging.

The random propylene ethylene copolymer of the present disclosure is obtained with a process be-ing carried out in a reactor having two interconnected polymerization zones, a riser and a downcomer, wherein the growing polymer particles:

(a) flow through the first of said polymerization zones, the riser, under fast fluidization conditions in the presence of propylene and of ethylene;

(b) leave the riser and enter the second of said polymerization zones, the downcomer, through which they flow downward in a densified form in the presence of propylene and of ethylene wherein the concentration of ethylene in the downcomer is higher than in the riser;

(c) leave the downcomer and are reintroduced into the riser, thus establishing a circulation of polymer between the riser and the downcomer.

Thus a further object of the present disclosure is a random propylene ethylene copolymer having the above described features and being obtained with a process being carried out in a reactor having two interconnected polymerization zones, a riser and a downcomer, wherein the growing polymer particles:

(d) flow through the first of said polymerization zones, the riser, under fast fluidization conditions in the presence of propylene and of ethylene;

(e) leave the riser and enter the second of said polymerization zones, the downcomer, through which they flow downward in a densified form in the presence of propylene and of ethylene wherein the concentration of ethylene in the downcomer is higher than in the riser;

leave the downcomer and are reintroduced into the riser, thus establishing a circulation of polymer between the riser and the downcomer.

In the first polymerization zone (riser), fast fluidization conditions are established by feeding a gas mixture comprising propylene and ethylene at a velocity higher than the transport velocity of the polymer particles. The velocity of said gas mixture is generally comprised between 0.5 and 15 m/s, preferably between 0.8 and 5 m/s. The terms "transport velocity" and "fast fluidization conditions" are well known in the art; for a definition thereof, see, for example, "D. Geldart, Gas Fluidisation Technology, page 155 et seq., J. Wiley & Sons Ltd., 1986".

In the second polymerization zone (downcomer), the polymer particles flow under the action of gravity in a densified form, so that high values of density of the solid (mass of polymer per volume of reactor) are achieved, said density of solid approaching the bulk density of the polymer. Throughout the present description a "densified form" of the polymer implies that the ratio between the mass of polymer particles and the reactor volume is higher than 80% of the "poured bulk density" of the obtained polymer. The "poured bulk density" of a polymer is a parameter well known to the person skilled in the art. In view of the above, it is clear that in the downcomer the polymer flows downward in a plug flow and only small quantities of gas are entrained with the polymer particles.

According to the process of the present invention, the two interconnected polymerization zones are operated in such a way that the gas mixture coming from the riser is totally or partially prevented from entering the downcomer by introducing into the upper part of the downcomer a liquid and/or gas stream, denominated "barrier stream", having a composition different from the gaseous mixture present in the riser. In order to comply with this process feature, one or more feeding lines for the barrier stream are placed in the downcomer close to the upper limit of the volume occupied by the polymer particles flowing downward in a densified form.

This liquid/gas mixture fed into the upper part of the downcomer partially replaces the gas mixture entrained with the polymer particles entering the downcomer. The partial evaporation of the liquid in the barrier stream generates in the upper part of the downcomer a flow of gas, which moves counter-currently to the flow of descendent polymer, thus acting as a barrier to the gas mixture coming from the riser and entrained among the polymer particles. The liquid/gas barrier fed to the upper part of the downcomer can be sprinkled over the surface of the polymer particles: the evaporation of the liquid will provide the required upward flow of gas.

The feed of the barrier stream causes a difference in the concentrations of monomers and/or hydrogen (molecular weight regulator) inside the riser and the downcomer, so that a bimodal polymer can be produced.

It is known that in a gas-phase polymerization process the reaction mixture comprises, besides the gaseous monomers, also inert polymerization diluents and chain transfer agents, such as hydrogen, useful to regulate the molecular weight of the obtained polymeric chains. The polymerization diluents are preferably selected from C2-C8 alkanes, preferably propane, isobutane, isopentane and hexane. Propane is preferably used as the polymerization diluent in the gas-phase polymerization of the invention, so that liquid propane is unavoidably contained in the barrier stream, which is fed to the upper part of the downcomer.

In one embodiment, the barrier steam comprises:

i. from 10 to 100% by mol of propylene;

ii. from 0 to 80% by mol of ethylene;

iii. from 0 to 30% by mol of propane;

iv. from 0 to 5% by mol of hydrogen.

The above indicated compositions of barrier stream can be obtained from the condensation of a part of the fresh monomers and propane, said condensed part being fed to the upper part of the downcomer in a liquid form. According to an embodiment, the above suitable compositions of barrier stream derive from condensation and/or distillation of part of a gaseous stream continuously recycled to the reactor having two interconnected polymerization zones.

Additional liquid and/or gas of suitable composition can be fed along the downcomer at a point below the barrier stream.

The recycle gas stream is generally withdrawn from a gas/solid separator placed downstream the riser, cooled by passage through an external heat exchanger and then recycled to the bottom of the riser. Of course, the recycle gas stream comprises, besides the gaseous monomers, also the inert polymerization components, such as propane, and chain transfer agents, such as hydrogen. Moreover, the composition of the barrier stream deriving from condensation and/or distillation of the gas recycle stream may be suitably adjusted by feeding liquid make-up monomers and propane before its introduction into the upper part of downcomer.

The operating parameters of temperature and pressure are those that are usual in gas-phase catalytic polymerization processes. For example, in both riser and downcomer the temperature is generally comprised between 60°C and 120 °C, while the pressure can range from 5 to 40 bar.

The process for preparing the propylene ethylene copolymer of the present disclosure is carried out in presence of a highly stereospecific heterogeneous Ziegler-Natta catalyst. The Ziegler-Natta catalysts suitable for producing the propylene ethylene copolymer of the disclosure comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application WO00163261.

Preferably, the solid catalyst component comprises Mg, Ti, halogen and an electron donor selected from succinates of formula (I):

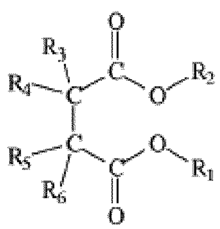

(I)

wherein the radicals $R^1$ and $R^2$, equal to or different from each other, are a $C_1$-$C_{20}$ linear or branched alkyl, alkenyl, cycloalkyl, aryl, arylalkyl or alkylaryl group, optionally containing heteroatoms belonging to groups 15-17 of the periodic table; the radicals $R^3$ to $R^6$ equal to or different from each other, are hydrogen or a $C_1$-$C_2$ linear or branched alkyl, alkenyl, cycloalkyl, aryl, arylalkyl or alkylaryl group, optionally containing heteroatoms, and the radicals $R^3$ to $R^6$ which are joined to the same carbon atom can be linked together to form a cycle.

$R^1$ and $R^2$ are preferably $C_1$-$C_8$ alkyl, cycloalkyl, aryl, arylalkyl and alkylaryl groups.

Particularly preferred are the compounds in which $R^1$ and $R^2$ are selected from primary alkyls and in particular branched primary alkyls. Examples of suitable $R^1$ and $R^2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R^3$ to $R^5$ are hydrogen and $R^6$ is a branched alkyl, cycloalkyl, aryl, arylalkyl and alkylaryl radical having from 3 to 10 carbon atoms. Another preferred group of compounds within those of formula (I) is that in which at least two radicals from $R^3$ to $R^6$ are different from hydrogen and are selected from $C_1$-$C_{20}$ linear or branched alkyl, alkenyl, cycloalkyl, aryl, arylalkyl or alkylaryl group, optionally containing heteroatoms belonging to groups.

Particularly preferred are the compounds in which the two radicals different from hydrogen are linked to the same carbon atom. Furthermore, also the compounds in which at least two radicals different from hydrogen are linked to different carbon atoms, that is $R^3$ and $R^5$ or $R^4$ and $R^6$ are particularly preferred.

According to a preferred method, the solid catalyst component can be prepared by reacting a titanium compound of formula $Ti(OR)_{n-y}X_y$ where n is the valence of titanium and y is a number between 1 and n, preferably TiC4, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130 "C). Then, the emulsion is quickly

quenched, thereby causing the solidification of the adduct in form of spherical particles. Examples of spherical adducts prepared according to this procedure are described in US 4,399,054 and US 4,469,648. The so obtained adduct can be directly reacted with the Ti compound or it can be previously subjected to thermal controlled dealcoholation (80-130 °C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0 °C); the mixture is heated up to 80-130 °C and kept at this temperature for 0.5-2 hours. The treatment with Tic4 can be carried out one or more times. The internal donor can be added during the treatment with $TiCl_4$ and the treatment with the electron donor compound can be repeated one or more times. Generally, the succinate of formula (I) is used in molar ratio with respect to the MgC12 of from 0.01 to 1 preferably from 0.05 to 0.5. The preparation of catalyst components in spherical form is described for example in European patent application EP-A-395083 and in the International patent application WO98144001. The solid catalyst components obtained according to the above method show a surface area (by B.E.T. method) generally between 20 and 500 m21g and preferably between 50 and 400 m21g, and a total porosity (by B.E.T. method) higher than 0.2 cm31g preferably between 0.2 and 0.6 cm31g. The porosity (Hg method) due to pores with radius up to 10.000A generally ranges from 0.3 to 1.5 cm31g, preferably from 0.45 to 1 cm31g.

The organo-aluminum compound is preferably an alkyl-Al selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $A1_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$ where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethox-ysilane, diphenyldimethoxysilane, methyl-t-butyldimethoxysilane, dicyclopentyldimethoxysilane, 2-ethylpiperidinyl-2-t-butyldimethoxysilane and 1,1,1 ,trifluoropropyl-2-ethylpiperidinyl-dimethoxysilane and 1,1,1 ,trifluoropropylmetildimethoxysilane. The external electron donor compound is used in such an amount to give a molar ratio between the organo-aluminum compound and said electron donor compound of from 0.1 to 500; prerably from 1 to 100; more preferably from 2 to 50.

EXAMPLES

The following examples are given to illustrate the present invention without any limiting purpose.

**Test Methods**

<u>Melt flow rate (MFR "L")</u>

Determined according to ISO 1133 (230 °C, 2.16 Kg)

<u>$^{13}$C NMR of propylene/ethylene copolymers</u>

$^{13}$C NMR spectra were acquired on a Bruker AV-600 spectrometer equipped with cryoprobe, operating at 160.91 MHz in the Fourier transform mode at 120°C.

The peak of the Sββ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1 ,2,2-tetrachloroethane-d2 at 120 °C with a 8 % wt/v concentration. Each spectrum was acquired with a 90°pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride- diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S \qquad PPE = 100\ T_{\beta\delta}/S \qquad EPE = 100\ T_{\delta\delta}/S$$

$$PEP = 100\ S_{\beta\beta}/S \qquad PEE = 100\ S_{\beta\delta}/S \qquad EEE = 100\ (0.25\ S_{\gamma\delta} + 0.5\ S_{\delta\delta})/S$$

(continued)

$$S = T\beta\beta + T\beta\delta + T\delta\delta + S\beta\beta + S\beta\delta + 0.25\ S\gamma\delta + 0.5\ S\delta\delta$$

The molar percentage of ethylene content was evaluated using the following equation:

$$E\%\ mol = 100 * [PEP+PEE+EEE]$$

The weight percentage of ethylene content was evaluated using the following equation:

$$E\%\ wt. = \frac{100 * E\%\ mol * MWE}{E\%\ mol * MWE + P\%\ mol * MWP}$$

where P% mol is the molar percentage of propylene content, while MWE and MWP are the molecular weights of ethylene and propylene, respectively.

The product of reactivity ratio r1r2 was calculated according to Carman (C.J. Carman, R.A. Harrington and C.E. Wilkes, Macromolecules, 1977; 10, 536) as:

The tacticity of Propylene sequences was calculated as mm content from the ratio of the PPP $mmT_{\beta\beta}$ (28.90-29.65 ppm) and the whole $mmT_{\beta\beta}$ (29.80-28.37 ppm)

Xylene-Soluble fraction (XS)

The Xylene-Soluble fraction (XS) was measured according to ISO 16152:2005, but with the following deviations:

- the volume of the polymer solution was 250 mL instead of 200 mL;
- the precipitation stage was carried out at 25°C for 30 minutes, but for the final 10 minutes the polymer solution was kept under stirring by a magnetic stirrer instead of no stirring at all;
- the final drying step was done under vacuum at 70 °C instead of 100 °C.

The XS is expressed as a weight percentage of the original 2.5 grams of polymer.

Intrinsic Viscosity of Xylene Soluble fraction (XSIV)

Intrinsic viscosity [η]

The sample is dissolved in tetrahydronaphthalene at 135 °C and then is poured into the capillary viscometer. The viscometer tube (Ubbelohde type) is surrounded by a cylindrical glass jacket; this setup allows temperature control with a circulating thermostated liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [η].

Flexural modulus (MEF)

Determined according to ISO 178.

Samples for the mechanical analysis have been obtained according to ISO 3167 .

Melting temperature (Tm) and crystallization temperature (Tc)

Both determined by differential scanning calorimetry (DSC) according to the ASTM D 3417 method, which is equivalent to the ISO 11357/1 and 3 method.

**Example 1 (invention)**

Preparation of the Ziegler-Natta solid catalyst component

The Ziegler-Natta catalyst was prepared according to Example 5, lines 48-55, of the European Patent EP728769B1.

Preparation of the catalyst system - Precontact

Before introducing it into the polymerization reactors, the solid catalyst component described above is contacted with aluminum-triethyl (TEAL) and with the dicyclopentyldimethoxysilane (D donor) under the conditions reported in Table 1.

Prepolymerization

The catalyst system is then subject to prepolymerization treatment at 20 °C by maintaining it in suspension in liquid propylene for a residence time of 9 minutes before introducing it into the polymerization reactor.

Polymerization

The polymerization was carried out in gas-phase polymerization reactor comprising two interconnected polymerization zones, a riser and a downcomer, as described in European Patent EP782587. Hydrogen was used as molecular weight regulator. The polymer particles exiting from the polymerization step were subjected to a steam treatment to remove the unreacted monomers and dried under a nitrogen flow.

The main precontact, prepolymerization and polymerization conditions and the quanti-ties of monomers and hydrogen fed to the polymerization reactor are reported in Table 1. Characterization data for the obtained polymers are reported in Table 2.

**Comparative example 4**

It was worked as in example 1, except that the polymerization was carried out according to the procedure disclosed in WO2011/144489, i.e. the RACO is produced in the downcomer and the BIPO in the riser.

The main precontact, prepolymerization and polymerization conditions and the quantities of monomers and hydrogen fed to the polymerization reactor are reported in Table 1. Characterization data for the obtained polymers are reported in Table 2.

**Table 1 - Process conditions**

| **Example** | | **1** | **2** | **3** |
|---|---|---|---|---|
| **PRECONTACT** | | | | |
| Temperature | °C | 15 | 15 | 15 |
| Residence Time | min | 15 | 15 | 15 |
| TEAL/catalyst | wt/wt | 6 | 6 | 5 |
| TEAL/Ext. Donor | g/g | 4 | 4 | 4 |
| **PREPOLYMERIZATION** | | | | |
| Temperature | °C | 20 | 20 | 20 |
| Residence Time | min | 8 | 8 | 8 |
| **POLYMERIZATION** | | | | |
| Temperature | bar-g | 68 | 64 | 63 |
| Pressure | bar-g | 25 | 24 | 23 |

(continued)

| POLYMERIZATION | | | | |
|---|---|---|---|---|
| Residence Time | min | 106 | 109 | 103 |
| Mileage | kg/kg | 27 | 33 | 32 |
| Split holdup riser | wt% | 30 | 30 | 33 |
| Split holdup downcomer | wt% | 70 | 70 | 66 |
| $C_2^-/ C_2^-$+ C3- riser | mol/m ol | 0.005 | 0.008 | 0.014 |
| $C_2^-/ C_2^-$+ $C3^-$ downcomer | mol/m ol | 0.017 | 0.025 | 0.05 |
| $H_2/C_3^-$ riser | mol/m ol | 0.013 | 0.013 | 0.063 |
| $H_2/C_2^-$ downcomer | mol/m ol | 2.4*10^-4 | 1.2*10^-4 | 1.2*10^-4 |
| Notes: $C_2^-$ = ethylene; $C_3^-$ = propylene; $H_2$ = hydrogen; Split = amount of polymer prepared in the concerned reactor referred to the total weight. | | | | |

**Table 2 - Polymer characterization**

| Example | | 1 | 2 | 3 | comp ex 4 | comp ex 5 | comp ex 6 |
|---|---|---|---|---|---|---|---|
| MFR (230°C/2.16kg) | g/10' | 0.45 | 0.22 | 0.48 | 0.48 | 1.8 | 0.8 |
| Ethylene units | %wt | 4.2 | 6.2 | 8.5 | 9.6 | 4.3 | 6.5 |
| XS | % | 9.6 | 13.7 | 21.4 | 30 | 7.7 | 19.8 |
| XSIV | dl/g | 3.9 | 4.3 | 4.7 | 2.69 | 0.74 | 1.46 |
| Flex. Mod. | MPa | 1335 | 970 | 700 | 395 | 690 | 505 |
| Tm | °C | 152.1 | 149.8 | 145.7 | 142.2 | 136.9 | 129.1 |
| Tc | °C | 101.0 | 98.3 | 93.7 | 95.3 | 88.3 | 85.7 |
| 1900 - 285×C2+50×Xs | | 1183 | 818 | 478 | 664 | 1060 | 1038 |
| Comparative example 5 is a commercial product Moplen RP220M sold by Lyondellbasell<br>Comparative example 6 is a commercial product Clyrell RC1908 sold by Lyondellbasell | | | | | | | |

## Claims

**1.** A random propylene ethylene copolymerr having:

(i) an ethylene derived units content, measured by $^{13}C$ NMR, ranging from 2.0 wt% to 11.0 wt%;
(ii) ) the fraction soluble in xylene at 25°C (Xs), measured according to USO 16152:2005 ranging from 7.1 wt% to 28.5 wt%;
(iii) the intrinsic viscosity of the fraction soluble in xylene at 25°C ranges from 3.5 dl/g to 5.2 dl/g;
(iv) the melting point is higher than 140.0°C and fulfils the following relation (I):

$$Tm>155-1.4xC2 \qquad (I)$$

Wherein Tm is the melting point of the propylene ethylene copolymerr measured by DSC and C2 is the is the wt% of ethylene derived units of the propylene ethylene copolymerr
(v) the flexural modulus is higher than 500MPa and fulfils the following relation (II)

$$TM> 1900 - 285xC2+50xXs \ (II)$$

wherein TM is the flexural modulus in MPa, C2 is the wt% of ethylene derived units of the propylene ethylene copolymer and Xs is the fraction soluble in xylene at 25°C (wt%) of the propylene ethylene copolymer; wherein:

the ethylene derived units are measured by $^{13}C$ NMR;
the fraction soluble in xylene at 25°C (Xs) is measured according to a modified ISO 16152:2005;
the intrinsic viscosity is measured in tetrahydronaphthalene at 135 °C;
the melting point is measured by DSC according to ASTM D 3417;
the flexural modulus is measured according to ISO 178;
wherein the propylene ethylene copolymer is a bipolymer containing only propylene and ethylene.

**2.** The random propylene ethylene copolymer according to claim 1 having the melt flow rate MFR. (ISO 1133 (230° C, 2.16 kg) ranging from 0.2 g/10 min to 100 g/10 min

**3.** The random propylene ethylene copolymer according to claims 1 or 2 having the ethylene derived units content ranging from 3.3 twt% to 10.2 wt%.

**4.** The random propylene ethylene copolymer according to anyone of claims 1-3 wherein the fraction soluble in xylene at 25°C, XS, ranges from 8.2 wt% to 25.3 wt%.

**5.** The random propylene ethylene copolymer according to anyone of claims 1-4 wherein relation (I) is Tm>156-1.4xC2.

**6.** The random propylene ethylene copolymer according to anyone of claims 1-5 wherein relation (II) is TM> 1920 - 285xC2+50xXs

**7.** The random propylene ethylene copolymer according to anyone of claims 1-6 having the ethylene derived units content ranging from 3.8 wt% to 9.2 wt%.

**8.** The random propylene ethylene copolymer according to anyone of claims 1-7 wherein the fraction soluble in xylene at 25°C, XS, ranges from 9.1 wt% to 22.0 wt%.

**9.** The random propylene ethylene copolymer according to anyone of claims 1-4 wherein the intrinsic viscosity of the fraction soluble in xylene at 25°C ranges from 3.7 dl/g to 5.0 dl/g.

## Patentansprüche

**1.** Statistisches Propylen-Ethylen-Copolymer mit

(i) einem Gehalt an von Ethylen abgeleiteten Einheiten, gemessen mittels $^{13}C$-NMR, im Bereich von 2,0 Gew.% bis 11,0 Gew.%;
(ii) wobei die in Xylol bei 25 °C lösliche Fraktion (Xs), gemessen gemäß ISO 16152:2005, im Bereich von 7,1 Gew.% bis 28,5 Gew.% liegt;
(iii) die Grenzviskosität der in Xylol bei 25 °C löslichen Fraktion im Bereich von 3,5 dl/g bis 5,2 dl/g liegt;
(iv) der Schmelzpunkt höher als 140,0 °C ist und die folgende Beziehung (I) erfüllt:

$$Tm > 155-1,4 \times C2 \quad (I)$$

wobei Tm der Schmelzpunkt des Propylen-Ethylen-Copolymers ist, gemessen mittels DSC, und C2 der Gewichtsprozentwert der von Ethylen abgeleiteten Einheiten des Propylen-Ethylen-Copolymers ist,
(v) der Biegemodul höher als 500 MPa ist und die folgende Beziehung (II) erfüllt:

$$TM > 1900 - 285 \times C2 + 50 \times Xs \quad (II)$$

wobei TM der Biegemodul in MPa ist, C2 der Gewichtsprozentsatz der von Ethylen abgeleiteten Einheiten des Propylen-Ethylen-Copolymers ist, und Xs die in Xylol bei 25 °C lösliche Fraktion (Gew.%) des Propylen-Ethylen-Copolymers ist,
wobei
die von Ethylen abgeleiteten Einheiten mittels $^{13}$C-NMR gemessen werden;
die in Xylol bei 25 °C lösliche Fraktion (Xs) gemäß einer modifizierten ISO 16152:2005 gemessen wird;
die Grenzviskosität in Tetrahydronaphthalin bei 135 °C gemessen wird;
der Schmelzpunkt gemäß ASTM D 3417 mittels DSC gemessen wird;
der Biegemodul gemäß ISO 178 gemessen wird;
wobei das Propylen-Ethylen-Copolymer ein Bipolymer ist, das nur Propylen und Ethylen enthält.

**2.** Statistisches Propylen-Ethylen-Copolymer nach Anspruch 1 mit einer Schmelzflussrate, MFR, (ISO 1133 (230 °C, 2,16 kg)) im Bereich von 0,2 g/10 min bis 100 g/10 min.

**3.** Statistisches Propylen-Ethylen-Copolymer nach Anspruch 1 oder 2, wobei der Gehalt an von Ethylen abgeleiteten Einheiten im Bereich von 3,3 Gew.% bis 10,2 Gew.% liegt.

**4.** Statistisches Propylen-Ethylen-Copolymer nach einem der Ansprüche 1 bis 3, wobei die in Xylol bei 25 °C lösliche Fraktion, XS, im Bereich von 8,2 Gew.% bis 25,3 Gew.% liegt.

**5.** Statistisches Propylen-Ethylen-Copolymer nach einem der Ansprüche 1 bis 4, wobei Beziehung (I) $Tm > 156 - 1,4 \times C2$ ist.

**6.** Statistisches Propylen-Ethylen-Copolymer nach einem der Ansprüche 1 bis 5, wobei Beziehung (II) $TM > 1920 - 285 \times C2 \times 50 \times Xs$ ist.

**7.** Statistisches Propylen-Ethylen-Copolymer nach einem der Ansprüche 1 bis 6 mit einem Gehalt an von Ethylen abgeleiteten Einheiten im Bereich von 3,8 Gew.% bis 9,2 Gew.%.

**8.** Statistisches Propylen-Ethylen-Copolymer nach einem der Ansprüche 1 bis 7, wobei die in Xylol bei 25 °C lösliche Fraktion, XS, im Bereich von 9,1 Gew.% bis 22,0 Gew.% liegt.

**9.** Statistisches Propylen-Ethylen-Copolymer nach einem der Ansprüche 1 bis 4, wobei die Grenzviskosität der in Xylol bei 25 °C löslichen Fraktion im Bereich von 3,7 dl/g bis 5,0 dl/g liegt.

## Revendications

**1.** Copolymère statistique de propylène-éthylène présentant :

(i) une teneur en motifs dérivés de l'éthylène, mesurée par $^{13}$C-RMN, située dans la plage de 2,0 % en poids à 11,0 % en poids ;
(ii)) la fraction soluble dans le xylène à 25 °C (Xs), mesurée selon la norme USO 16152:2005, située dans la plage de 7,1 % en poids à 28,5 % en poids ;
(iii) la viscosité intrinsèque de la fraction soluble dans le xylène à 25 °C étant située dans la plage de 3,5 dl/g à 5,2 dl/g ;
(iv) le point de fusion est supérieur à 140,0 °C et satisfait à la relation suivante (I) :

$$Tm>155-1,4xC2 \quad (I)$$

Tm étant le point de fusion du copolymère de propylène-éthylène mesuré par DSC et C2 étant le % en poids de motifs dérivés de l'éthylène du copolymère de propylène-éthylène
(v) le module de flexion est supérieur à 500 MPa et satisfait à la relation suivante (II)

$$TM>1900–285xC2+50xXs \quad (II)$$

TM étant le module de flexion en MPa, C2 étant le % en poids de motifs dérivés de l'éthylène du copolymère de propylène-éthylène et Xs étant la fraction soluble dans le xylène à 25 °C (% en poids) du copolymère

de propylène-éthylène ;
où
les motifs dérivés de l'éthylène sont mesurés par $^{13}C$-RMN ;
la fraction soluble dans le xylène à 25 °C (Xs) est mesurée selon une norme ISO 16152:2005 modifiée ;
la viscosité intrinsèque est mesurée dans du tétrahydronaphtalène à 135 °C ;
le point de fusion est mesuré par DSC selon la norme ASTM D 3417 ;
le module de flexion est mesuré selon la norme ISO 178 ;
le copolymère de propylène-éthylène est un bipolymère contenant uniquement du propylène et de l'éthylène.

**2.** Copolymère statistique de propylène-éthylène selon la revendication 1, présentant l'indice de fluidité à chaud MFR (ISO 1133 (230 °C, 2,16 kg)) situé dans la plage de 0,2 g/10 min à 100 g/10 min.

**3.** Copolymère statistique de propylène-éthylène selon les revendications 1 ou 2, présentant la teneur en motifs dérivés de l'éthylène située dans la plage de 3,3 % en poids à 10,2 % en poids.

**4.** Copolymère statistique de propylène-éthylène selon l'une quelconque des revendications 1 à 3, la fraction soluble dans le xylène à 25 °C, XS, étant située dans la plage de 8,2 % en poids à 25,3 % en poids.

**5.** Copolymère statistique de propylène-éthylène selon l'une quelconque des revendications 1 à 4, la relation (I) étant Tm>156-1,4xC2.

**6.** Copolymère statistique de propylène-éthylène selon l'une quelconque des revendications 1 à 5, la relation (II) étant TM>1920-285xC2+50xXs

**7.** Copolymère statistique de propylène-éthylène selon l'une quelconque des revendications 1 à 6, présentant la teneur en motifs dérivés de l'éthylène située dans la plage de 3,8 % en poids à 9,2 % en poids.

**8.** Copolymère statistique de propylène-éthylène selon l'une quelconque des revendications 1 à 7, la fraction soluble dans le xylène à 25 °C, XS, étant située dans la plage de 9,1 % en poids à 22,0 % en poids.

**9.** Copolymère statistique de propylène-éthylène selon l'une quelconque des revendications 1 à 4, la viscosité intrinsèque de la fraction soluble dans le xylène à 25 °C étant située dans la plage de 3,7 dl/g à 5,0 dl/g.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0192406 A
- WO 208012144 A
- EP 3015503 A
- WO 2009080660 A
- WO 2013092615 A
- EP 45977 A
- EP 361494 A
- EP 728769 A
- EP 1272533 A
- WO 00163261 A
- US 4399054 A
- US 4469648 A
- EP 395083 A
- WO 98144001 A
- EP 728769 B1
- EP 782587 A
- WO 2011144489 A

### Non-patent literature cited in the description

- **D. GELDART.** Gas Fluidisation Technology. J. Wiley & Sons Ltd, 1986, 155
- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536
- **KAKUGO ; M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride- diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536
- **HUGGINS, M.L.** *J. Am. Chem. Soc.,* 1942, vol. 64, 2716